# EUROPÄISCHE PATENTSCHRIFT

(11) **EP 0 799 502 B1**
(45) Veröffentlichungstag und Bekanntmachung des Hinweises auf die Patenterteilung: **10.03.1999**
(21) Anmeldenummer: 95942684.2
(22) Anmeldetag: 16.12.1995
(51) Int. Cl.: H01L 41/09

(54) **PIEZOAKTUATORISCHES ANTRIEBS- BZW. VERSTELLELEMENT**
PIEZOELECTRICALLY ACTUATED DRIVING OR ADJUSTING ELEMENT
ELEMENT D'ENTRAINEMENT OU DE REGLAGE A ACTIONNEMENT PIEZO-ELECTRIQUE

(30) Priorität: 21.12.1994 DE 4445642
(43) Veröffentlichungstag der Anmeldung: 08.10.1997
(73) Patentinhaber: MARCO SYSTEMANALYSE UND ENTWICKLUNG GmbH, D-85221 Dachau (DE)
(72) Erfinder: REUTER, Martin, D-85221 Dachau (DE); VOIGT, Konrad, D-07639 Bad Klosterlausnitz (DE)
(74) Vertreter: Pfeiffer, Rolf-Gerd
(86) Internationale Anmeldenummer: EP9504991
(87) Internationale Veröffentlichungsnummer: WO9619836

(56) Entgegenhaltungen:
- EP-A- 0 536 832
- PATENT ABSTRACTS OF JAPAN Bd. 012, Nr. 158 (E-608) 13 Mai 1988 & JP,A,62 272 575 (MATSUSHITA ELECTRIC WORKS LTD) 26 November 1987
- PATENT ABSTRACTS OF JAPAN Bd. 018, Nr. 382 (E-1580) 19 Juli 1994 & JP,A,06 105 569 (OLYMPUS OPTICAL CO LTD) 15 April 1994

## Beschreibung

Die Erfindung betrifft ein piezoaktuatorisches Antriebs- bzw. Verstellelement gemäß der Gattung des ersten Patentanspruchs, welches sowohl für die Übertragung reiner Translations- als auch Rotationsbewegungen Verwendung finden kann.

Piezoelektrische Antriebs- und Verstellelemente sind bereits bekannt. Als einfachste Bauform kann dabei ein piezoelektrisches Element sich einerseits an einer ruhenden Auflage abstützen und andererseits gegen ein verstellbares Bauelement drücken. Bei Anlegen einer elektrischen Spannung an das piezoelektrische Element dehnt sich dieses aus, wodurch das verstellbare Bauelement auslenkbar ist. Bei solchen Aufbauten, die in vielfältigen Ausführungen bekannt sind, wird die relativ geringe Längenänderung eines piezoelektrischen Bauelements, die auch bei aus Einzelelementen aufgebauten Stapeln mit Stapelhöhen in der Größenordnung von 20 mm nicht größer als ca. 20 - 30 um bei maximal zulässiger Anregungsspannung ist, durch Hebelkonstruktionen entsprechend übersetzt. Eine solche Anordnung ist als Präzisionsantrieb z.B. für Justierarbeiten weit verbreitet (vgl. Firmenkatalog der Fa. Physik Instruments, Waldbronn [1994]). Der Nachteil solcher Anordnungen, insbesondere im in Vorrichtungen eingebauten Zustand, besteht darin, daß zum einen das piezoelektrische Element stets eine Arbeit gegen die Hebelaufbauten und entsprechende Rückstellmittel zu leisten hat, zum anderen aber auch darin, daß schwankende Kraft- und Temperatureinflüsse Längenveränderungen des Elements selbst bewirken. Insbesondere wirken sich dabei unterschiedliche thermische Ausdehnungskoeffizienten des piezoelektrischen Materials und dem Material der übrigen Vorrichtung, z.B. Stahl, nachteilig aus. Zur Kompensation dieses Effekts muß das Stellelement bei Temperaturänderungen entweder nachjustiert oder aber vermittels eines empfindlichen Positionsmeßsystems automatisch zu Lasten des verfügbaren Stellbereiches nachgeregelt werden. Diese Maßnahmen bedingen jedoch einen z.T. erheblichen zusätzlichen Aufwand.
Weiterhin weisen genannte Bauformen durch die Rückstellmittel eine geringe Eigensteifigkeit auf, so daß sie nur mit geringen Reaktionszeiten quasistatisch arbeiten können.

Desweiteren sind auch Bauformen mit piezoelektrischen Elementen bekannt, die durch Addition von Einzelschritten große Verstellbereiche erzielen (vgl.: Müller, F. "Entwicklung eines piezoelektrischen Stoßantriebes mit ausgeprägter Klemmung", Univ. Diss., Dresden [1986]; Roscher, H. J. "Zur optimalen Gestaltung selbständiger piezoelektrischer Stellantriebe mit magnetischer Klemmung für Mikropositioniereinrichtungen", TH Diss. Karl-Marx-Stadt [1980]). Beim sogenannten "Inchworm" sind dabei zumindest drei unabhängig arbeitende piezoelektrische Stapelelemente zu einer Baugruppe vereint, die je nach elektrischer Ansteuerung unterschiedlich kontraktieren oder expandieren, wodurch die Baugruppe Bewegungen ausführt, bzw. diese auf das jeweils anzutreibende Element überträgt. Neben des recht diffizilen konstruktiven Aufbaus solcher Bauformen weisen diese weitere Nachteile auf So sind die erreichbaren Einzelschrittweiten relativ gering und liegen bei nur ca. 20 um. Diese Vorrichtungen sind bzgl. Temperaturschwankungen ebenfalls nicht eigenkompensiert. Mit ihnen sind zwar recht hohe Klemmkräfte erreichbar, die jedoch ihrerseits zu einem relativ hohen Verschleiß bei ihrem Einsatz führen (DE44 10 248 C1).
Eine weitere bekannte Grundvariante für Antriebsbaugruppen mit piezoelektrischen Bauteilen sind sogenannte Stoßantriebe, die als Biegeelemente, bestehend aus zwei piezoelektrischen Platten, die gegenläufig mit elektrischen Wechselspannungen beaufschlagt werden, ausgeführt sind. Dabei vollführen die Eingriffspunkte dieser Elemente elliptische Bewegungen, die auf ein Antriebselement einwirken und dieses bspw. in Rotation versetzen können. Insbesondere beim Einsatz mehrerer solcher Elemente sind z.T. erstaunliche Rotationsgeschwindigkeiten erreichbar, jedoch sind nur geringe Drehmomente bzw. Kräfte übertragbar. Neben den geringen Resonanzfrequenzen weisen aber auch diese Elemente einen hohen Verschleiß auf(ePa 0 536 832 A1).

In EP 0 574 945 A1 ist eine Vorrichtung zur Betätigung eines Ventilelements beschrieben, bei der o.g. Problem der Eigenkompensation bei Temperaturschwankungen durch den Einsatz von zwei piezoelektrischen Stapeln, die jeder für sich auf einen Betätigungshebel für ein Ventil einwirken, begegnet wird. Mit dieser Anordnung werden an beiden, die Stapel erfassenden Schenkeln, an die die Stapel jeweils über Gelenkpunkte angebunden sind, Kipp- und/oder Hubbewegungen erzeugt. Die piezoelektrischen Stapelelemente vollführen beim Betrieb der Vorrichtung im wesentlichen freie Bewegungen, wobei sich Dreh- und Kippbewegungen überlagern. Dabei ist dieser Aufbau gegen äußere Kräfte wenig steif und benötigt zusätzliche Anschläge.

Der Erfindung liegt die Aufgabe zugrunde, ein piezoaktuatorisches Antriebs- bzw. Verstellelement anzugeben, das einen einfachen, kompakten und sehr steifen Aufbau aufweist, hohe Verstellwege und Reaktionsgeschwindigkeiten ermöglicht, für vielfältigste Verstell- und Antriebsaufgaben, bei prinzipiell gleichem Aufbau, einsetzbar ist, ohne die Nachteile des Standes der Technik aufzuweisen.

Die Aufgabe der Erfindung wird durch die kennzeichnenden Merkmale der Patentansprüche gelöst. Das Wesen der Erfindung besteht darin, daß zwei Stapel aus piezoelektrischem, insbesondere piezokeramischem Material in einer Halterung mit einer symmetrisch wirkenden Kraft beaufschlagt, derart eingespannt sind, daß sie bei Anlegen einer elektrischen Spannung definierte Längenänderungen erfahren, wobei die symmetrisch wirkende Vorspannkraft erhalten bleibt, und genannte Längenänderung mit hoher Übersetzung bzw. großer Kraft auf die Gesamtvorrichtung bzw. geeignete Antriebsmittel übertragbar sind.

Die Erfindung soll nachstehend anhand von zehn Ausführungsbeispielen und beigefügter schematischer Zeichnungen näher erläutert werden. Es zeigen:
- Fig. 1: einen schematischen Aufbau eines gemäß der Erfindung ausgebildeten reinen Translationselements,
- Fig. 2: einen schematischen Aufbau eines gemäß der Erfindung ausgebildeten Antriebselements, mit dem auch Antriebe, insbesondere Schrittantriebe ermöglicht werden,
- Fig. 3: einen weiteren schematischen Aufbau, der im Rahmen der Erfindung liegt,
- Fig. 4: einen schematischen Aufbau gemäß der Erfindung, bei dem eine symmetrische Vorspannkraftbeaufschlagung durch asymmetrisch angeordnete Mittel erfolgt,
- Fig. 4a: eine spiegelsymmetrische Anordnung zweier Baugruppen gemäß Fig. 4,
- Fig. 5: einen erfindungsgemäßen Aufbau in schematischer Draufsicht, bei dem vier piezoelektrische Stapel zur Anwendung gelangen,
- Fig. 6: einen schematischen Aufbau, bei dem unter Einsatz erfindungsgemäßer Elemente eine Verstellung in mehreren Koordinatenrichtungen ermöglicht wird,
- Fig. 7: eine Variante eines linearen Aufbaus eines Antriebs mit zwei erfindungsgemäßen Elementen
- Fig. 8: eine schematische Draufsicht einer erfindungsgemäßen Anordnung zur Verschiebung bzw. Drehung eines Tisches,
- Fig. 9 und 10: schematisch dargestellte Anordnungen zum Rotationsantrieb von Wellen bzw. Hohlzylindern unter Verwendung erfindungsgemäßer Antriebselemente.

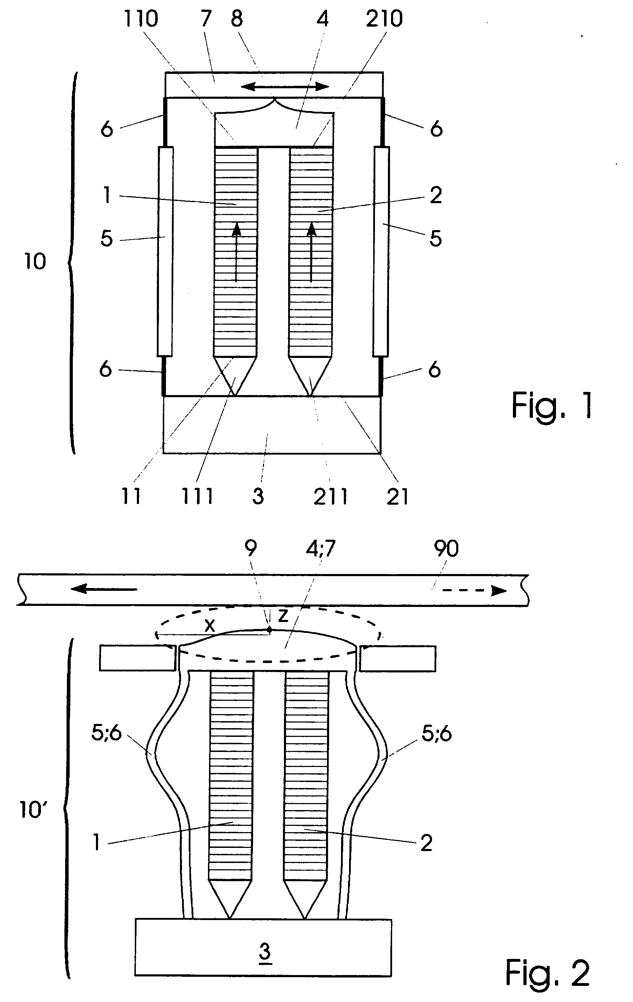

In Figur 1 ist ein erfindungsgemäßes Bauelement, das in seiner Gesamtheit im weiteren mit 10 bezeichnet werden soll, in Ruhestellung dargestellt, bei dem zwei in Stapelform vorliegende piezokeramische Baugruppen 1, 2 mit einem Abstand von 1 mm nebeneinander parallel angeordnet sind. Stirnflächen 11 bzw. 21 eines jeden Stapels stützen sich einerseits über eine verkippbare Anbindung 111 bzw. 211, die im Beispiel als in einer Dimension verkippbares Festkörpergelenk ausgeführt sein kann, an einem Schenkel 3 ab. Andererseits sind die zweiten Stapelstirnflächen 110 und 210 von einer biegesteifen Traverse 4 gemeinsam erfaßt, an welcher genannte zweiten Stirnflächen im übrigen plan und starr aufliegen. Im Beispiel weist die Traverse 4 ein mittig zwischen den Stapelachsen angeordnetes Festkörpergelenk 8 auf. Die bis hierher genannten Baugruppen sind in einem Festkörperparallelogramm eingespannt, das aus genanntem Schenkel 3, einem weiteren Schenkel 7 und diese zu beiden Seiten verbindenden Mittel 5, 6 gebildet ist. Ebenso liegt es im Rahmen der Erfindung, die Einspannung und symmetrische Kraftbeaufschlagung der genannten zwei Stapel 1, 2 über einen, nicht dargestellten, symmetrisch zu den Stapeln 1, 2 angeordneten Zuganker zu realisieren. Genannte Mittel 6 sind im Beispiel als Festkörpergelenke ausgebildet. Parallel zu genannten Stapelachsen wirkende Vorspannmittel 5, sind bspw. mit Schrauben o.ä. ergänzbar, die eine definierte Einstellung der Vorspannkraft, die in der Größenordnung von 20 - 25 N/mm² liegen sollte, ermöglichen, welche nicht näher dargestellt sind, da die absolute Größe der Vorspannkraft die grundsätzliche Funktionsfähigkeit der Erfindung nicht weiter berührt. Werden nun die piezokeramischen Stapel mit voneinander differierenden elektrischen Spannungen beaufschlagt, führt dies zu einer voneinander abweichenden Kontraktion bzw. Expansion der Stapel in ihrer durch Pfeile angedeuteden Achsrichtung, was ein leichtes Verkippen der Stapel bewirkt, die ihrerseits über das Festkörpergelenk 8 der gemeinsamen Traverse 4 mit dem Schenkel 7 in Eingriff stehen und somit ein seitliches Auslenken des Festkörperparallelogramms (angedeutet durch einen Doppelpfeil) wegen der, durch die Festkörpergelenke 6 geschaffenen Ausweichmöglichkeit nach sich zieht. Auf diese Weise sind bei Einsatz von ca. 20mm hohen piezokeramischen Stapeln, die bei maximal anlegbarer Spannung weiterhin nur Längenänderungen zwischen 20 um bis 30 µm aufweisen, seitliche Auslenkungen des Festkörperparallelogramms in der Größenordnung von 200 - 250 um übersetzbar.

Die Hauptvorteile der beschrieben (und auch im weiteren zu beschreibenden) Anordnung(en) bestehen darin, daß
- durch die Verwendung zweier Stapel die Vorrichtung bzgl. Temperaturveränderungen eigenkompensiert ist,
- bei elektrischer Aufladung der Stapel im Gegentakt keine Arbeit gegen die Schenkel 3 und 7 oder sonstige Vorspannmittel zu leisten ist, weshalb die Vorspannung bei dieser Betriebsweise sehr steif ausgelegt sein kann,
- große Auslenkungen bei gleichzeitig definiert und präzise einstellbaren Absolutauslenkungen erreichbar sind,
- bei elektrischer Aufladung der Stapel im Gegentakt, eine definierte aktive Rückstellung (bzw. Gegenauslenkung in anderer Richtung) der Vorrichtung, ohne eine zusätzliche äußere Kraftbeaufschlagung, erfolgt und
- extrem kurze Stellzeiten (ca. 1 ms) ohne Überschwingen oder Resonanzerscheinungen erreichbar ist.

Ein weiterer im Rahmen der Erfindung liegender Aufbau 10' ist in Figur 2 schematisch dargestellt. Grundsätzlich analog zu Fig. 1 sind hier wieder zwei piezokeramische Stapel 1, 2 zwischen einem Schenkel 3 und eine gemeinsame biegesteife Traverse 4 eingespannt. Der Traverse 4 ist im Beispiel, ohne deren sonstige weitere Gestaltung im Rahmen der jeweiligen Verwendung damit zu beschränken, eine ballige Oberfläche gegeben. Im Unterschied zu Fig. 1 ist hier die symmetrische Kraftbeaufschlagung der beiden Stapel durch symmetrisch die Stapel umschließende Federmittel, die im Beispiel als Biegefedern 5 ausgebildet sind, realisiert, die nicht nur durch ihre Anbindung an die Traverse 4 und den Schenkel 3 eine Kraft auf die Stapel ausüben, sondern zugleich auch die Funktion der Festkörpergelenke 6 (wie in Fig. 1) übernehmen. Eine elektrische Spannungsansteuerung analog zu Fig. 1 ist hier ebenfalls möglich. Von besonderer Bedeutung ist jedoch eine elektrische Ansteuerung der beiden Stapel 1, 2 mit einer wählbaren Phasenverschiebung eines Sinusspannungsanteils bspw. mit 90°. Die Bewegung, die der Kulminationspunkt 9 der Traverse 4 ausführt, wird in diesem Fall komplizierter; er führt dann nämlich eine elliptische Bewegung aus, die strichliniert angedeutet ist. In Richtung der kleinen Halbachse z wirkt dann zusätzlich eine nicht übersetzte gleichsinnige Längenänderung der Stapel 1, 2. Der Hub in dieser Richtung ist zwar klein, es sind aber große Kräfte übertragbar. Die Größe des Hubs in z-Richtung ist durch die Federcharakteristik der Vorspannfedern 5 beeinflußt. Je geringer deren Steifigkeit ist, um so größer ist der erreichbare Hub in dieser Richtung und nur begrenzt durch die maximal erzielbare Expansion der Stapel 1, 2. Eine derartige Ausführung und Betriebsweise der Erfindung ist besonders geeignet für deren Einsatz als Schrittantrieb. Läßt man die Traverse 4 in der Phase einer gleichsinnigen Expansion in x-Richtung gegen eine translatorisch bewegliche Gegenfläche 90 drücken, so daß eine kraftschlüssige Verbindung hergestellt wird, so wird in der nachfolgenden Phase diese Gegenfläche mit hebelübersetzter Auslenkung in x-Richtung verschoben. In der Kontraktionsphase der Stapel löst sich genannte Verbindung und es erfolgt eine freie Rückwärtsbewegung der Traverse bis zur erneuten Herstellung einer kraftschlüssigen Verbindung. Bei Einsatz von piezoelektrischen Stapeln mit typischen Längen von 20mm läßt sich dabei ein Hub von ca. 15 µm in z-Richtung und eine Auslenkung von ca. 200 um in x-Richtung erreichen. Wird die Expansion der Stapel 1, 2 in Klemmrichtung beim Erreichen der Koppelfläche begrenzt, so wirkt wegen der großen Eigensteifigkeit der Stapel eine hohe Klemmkraft. Wird die Traverse 4, wie im Beispiel dargestellt, mit einer abgerundeten Oberfläche ausgebildet, bzw. zusätzlich mit einer solchen versehen, so kann eine linienhafte Ankopplung an die anzutreibende Gegenfläche erfolgen, die wenig Justageaufwand erfordert, wodurch ein besonders verschleißarmer Betrieb gewährleistet ist. Ein solcher Antrieb ist problemlos mit 1 kHz betreibbar, wodurch Vorschubgeschwindigkeiten von mindestens 100 mm/s erreichbar sind. Durch Einstellen des Phasenwinkels zwischen 0° und 180° kann die Bewegungsamplitude und damit die Schrittweite von 0 - 200 um stufenlos eingestellt und damit die Funktion eines stufenlos arbeitenden Getriebes realisiert werden. Phasenwinkel zwischen 180° und 360° erzeugen entsprechende Schritte in entgegengesetzter Richtung. Für Feinpositionierungen ist durch statische Ansteuerung der Stapel im Gegentakt entsprechend des Ausführungsbeispiels zu Fig. 1 ein Stellbetrieb mit höchster Präzision realisierbar.

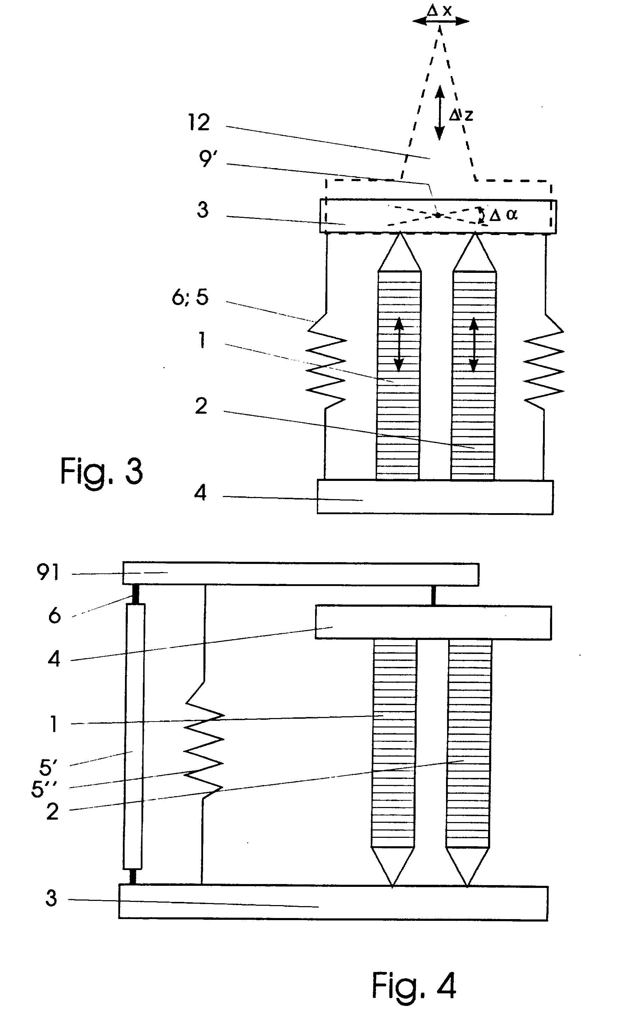

In Figur 3 ist eine weitere Ausgestaltung der Erfindung dargestellt. Diese Anordnung erzeugt bei ϕ = 0° einen Hub (Δz) in z-Richtung und bei ϕ =180° eine Verkippung (Δα) des Schenkels 3 um einen Punkt 9', die durch Anbringung eines strichliniert dargestellten Hebels 12 in eine Translation (Δx) in x-Richtung gewandelt werden kann. Der Vorteil einer solchen Ausbildung besteht in einer durch die Länge des Hebels 12 einstellbaren Übersetzung in x-Richtung und der geringen effektiv zu bewegenden Masse, wodurch noch größere Reaktionsgeschwindigkeiten als nach den Ausführungen von Fig. 1 und Fig. 2 erreichbar sind. Ebenso kann genannter Hebel 12 auch abgewinkelt ausgebildet sein, wenn kein Hub erforderlich ist.

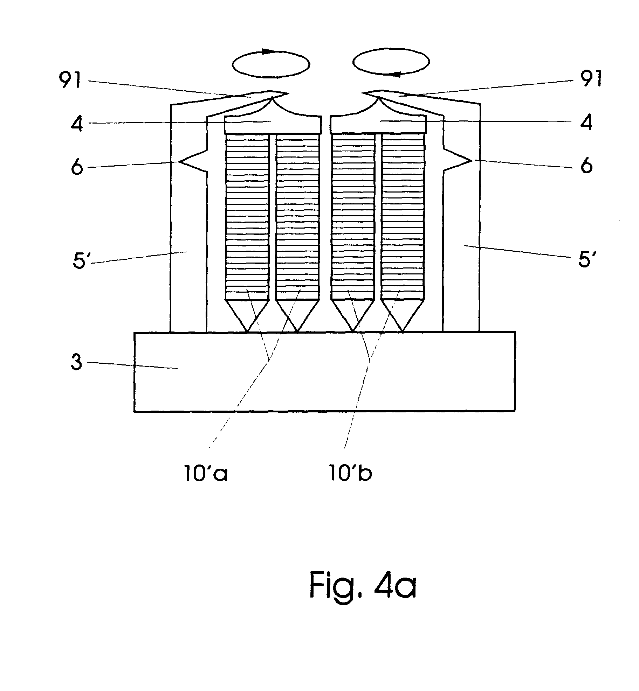

Figur 4 zeigt eine andere prinzipielle Ausführungsmöglichkeit gemäß der Erfindung, bei der die geforderte symmetrische Aufbringung der Vorspannkraft auf beide piezoelektrische Stapel 1, 2 mittels asymmetrisch angebrachter Druck- und Zugelemente 5', 5" erfolgt. Die Einbringung von bspw. Festkörpergelenken 6 in eine seitlich angeordnete Druckstange 5' ermöglicht die unter Fig. 1 angesprochene seitliche Auslenkung der Anordnung. Entsprechend zu gestaltende, nicht näher dargestellte Antriebskörper sind bspw. auf einer Querstange 91 zusätzlich anbringbar. Eine Ausführung gemäß dieser Figur erlaubt einen besonders platz- und masse sparenden Aufbau der Krafterzeugungs- und Kippelemente sowie der Traverse 4 und damit sehr hohe Reaktionsgeschwindigkeiten. Durch die mit einer derartigen Ausführung geschaffene Möglichkeit, der Ausbildung einer spiegelsymmetrischen Anordnung mit sehr eng benachbarten Koppelpunkten, wie in Fig. 4a schematisch dargestellt (wobei dort ein Betrieb der jeweiligen Stapelpaarungen im Gegentakt angedeutet ist), wird ein äußerst ruhiger Betrieb der Gesamtvorrichtung gewährleistet.

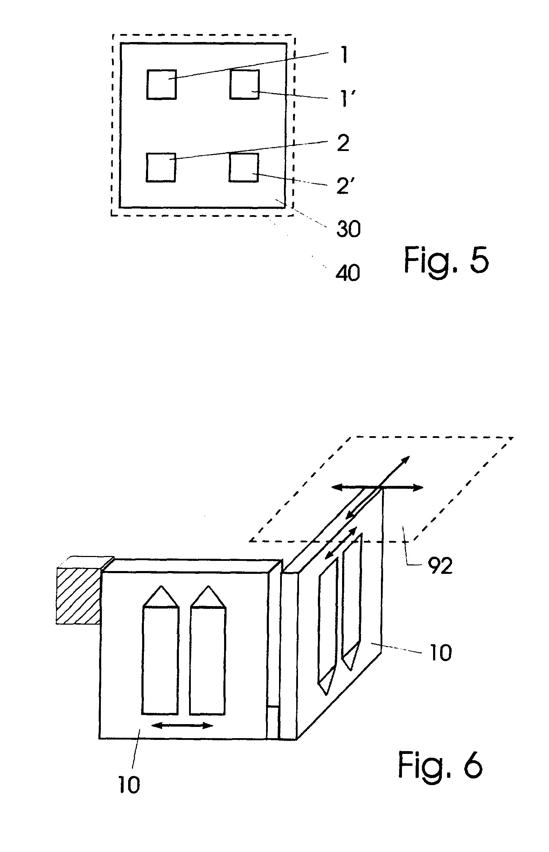

In Figur 5 ist schematisch eine teilweise Anordnung in Draufsicht dargestellt, bei der nicht nur, wie bisher beschrieben, zwei piezoelektrische Stapel, sondern vier zum Einsatz gelangen, welche analog zu den Figuren 1 und 2 nicht an einen Schenkel 3, sondern an eine Schenkelplatte 30 andrücken. Die piezoelektrischen Stapel 1, 1', 2, 2' sind dabei im Karree verteilt angeordnet. Je nach dem, ob diese Anordnung an einer Traversenplatte 40 oder der Schenkelplatte 30 festgehalten wird, ergibt sich analog zu den Figuren 2 und 3 eine zweidimensionale xy-Verschiebung oder eine zweidimensionale Verkippung um die x- und y-Achse, die ggf. durch einen hier nicht dargestellten Hebel (analog zu Hebel 12 in Fig. 3) in eine xy-Verschiebung gewandelt werden kann. Durch eine entsprechend des zweiten und dritten Ausführungsbeispiels beschriebene Ansteuerung können diese Bewegungsformen jeweils mit Hubbewegungen in z-Richtung kombiniert werden (Ellipsen). Eine solche 4-Stapel-Anordnung ist äußerst kompakt und kann einen x-y-Verstellantrieb, bestehend aus zwei orthogonal verbundenen, jeweils nur eindimensional wirkenden Anordnungen, wie nachfolgend ausgeführt wird, ersetzen. Die schenkelplattenseitge Verkippungsmöglichkeit der Einzelstapelanbindung muß hierbei jedoch derart ausgeführt sein, daß mehr als ein Freiheitsgrad zugelassen ist. Dies kann z.B. durch kegelförmig, vorzugsweise pilzkopfartig, insbesondere als Festkörpergelenk ausgebildete Kopplungsstellen realisiert sein.

Figur 6 zeigt in sehr vereinfachter Form eine Kombination zweier erfindungsgemäßer Elemente 10, die einseitig fest miteinander so verbunden sind, daß ihre Wirkrichtungen orthogonal zueinander und ebenfalls verbunden sind, wodurch gleichfalls ein x-y-Verstellantrieb eines strichliniert angedeuteten Tisches 92 realisierbar ist. Dieser erfindungsgemäße Aufbau ist gegenüber einer Ausführung gemäß Fig. 5 zwar etwas voluminöser, dafür aber in der elektrischen Beschaltung der piezoelektrischen Stapel überschaubarer. Wie sich leicht erkennen läßt, ist, durch eine weitere Anbindung eines dritten erfindungsgemäßen Elementes 10 mit zu gezeigten beiden wiederum orthogonaler Wirkrichtung, auf einfache Weise ein x-y-z-Verstellantrieb fertigbar.

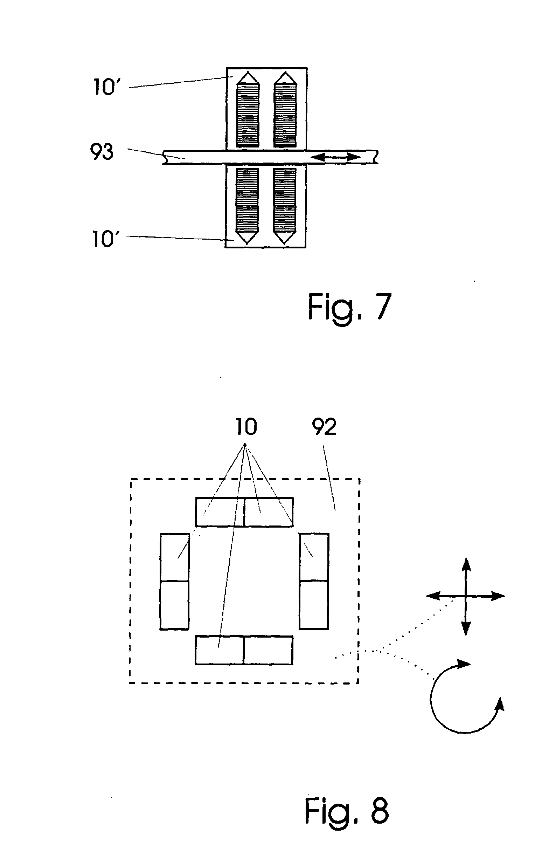

In Figur 7 ist eine weitere Möglichkeit eines Schrittantriebes mit mehreren erfindungsgemäßen Elementen dargestellt. Die beiden erfindungsgemäßen Antriebselemente 10 sind hierbei um 180° gegenüberstehend, ansonsten aber in einer Ebene angeordnet. Werden beide mit identischen Spannungsverläufen symmetrisch beaufschlagt, wirken sie auch beide gleichzeitig auf ein anzutreibendes Element 93 ein, wobei sich die auf das Element 93 einwirkenden Koppelkräfte gegenseitig kompensieren, was zu folgenden Vorteilen führt:
- exaktes Ein- und Auskoppeln mit geringem Hub,
- keine Anregung von Resonanzen des anzutreibenden Elements 93 und
- geringer Aufwand für Lagerung und Führung.
Ebenso kann in dieser Ausführungsform statt der schematisch angedeuteten Antriebselemente 10 je eine Antriebsausbildung nach Fig. 4a zum Einsatz gelangen, wobei dann die durch 10'a und 10'b gebildeten und auf einer gemeinsamen Basis angeordneten Antriebe (vgl. Fig. 4a) im Gegentakt betrieben werden. Dies bewirkt, daß eines der Antriebspaare, bei einem Aufbau gemäß Fig. 7, immer im Gegentakt in bezug auf das anzutreibende Element in gekoppelter Stellung verbleibt, während der jeweils andere sich in Rückholbewegung befindet. Dabei wird die Basis wesentlich gleichmäßiger belastet und es treten nur Verkippkräfte auf, die durch eine Parallelogrammanbindung an ein Gehäuse kompensierbar sind.

In Figur 8 sind schematisch je parallel zu einem Paar und die Paare orthogonal zueinander angeordnete Einzelantriebe 10 in Draufsicht dargestellt. Diese Einzelantriebe 10 können zum einen entweder nur paarweise gegenüberstehend mit genannten Spannungsverläufen gleichsinnig angesteuert werden, so daß eine aufeinanderfolgende oder auch parallel ablaufende x-y-Verschiebung eines strichliniert dargestellten Verstelltisches 92 möglich wird. Zum anderen ist auch eine jeweils paarweise Ansteuerung gegenüberliegender Einzelelemente im entgegengesetzten Richtungssinn möglich, wodurch sich der Tisch 92 in Rotation versetzen läßt. Die jeweilig erreichbaren Bewegungsrichtungen sind durch Doppelpfeile angedeutet.

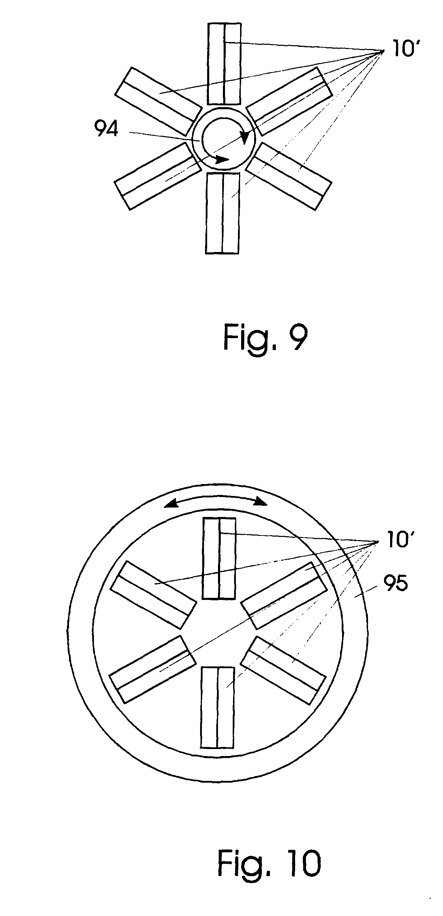

In Figur 9 und 10 sind Gestaltungsformen beschrieben, bei denen mehrere erfindungsgemäße Antriebselemente 10' entweder am Außenumfang einer Welle 94 (Fig. 9) oder am Innenumfang eines Hohlzylinders 95 (Fig. 10) angreifen. Auch auf diese Weise ist ein Schrittantrieb für rotierende Bewegungen realisierbar. Die Zahl der dabei zum Einsatz gelangenden erfindungsgemäßen Elemente 10 und damit die maximal erreichbare Klemmkraft ist entsprechend des aufzubringenden Drehmoments auf leichte Weise anpaßbar. Ebenso ist die elektrische Ansteuerung aller Antriebselemente 10 bezüglich ihrer Schrittweite und des zeitlichen Ablaufs zueinander beliebig wählbar, z.B. um einen optimalen Rundlauf zu erzielen.

Bei allen beschriebenen Antriebsaufgaben ist zu beachten, daß für eine gegebene Art der Anbringung eines Stapelpaares der erreichbare Verstellweg von der Größe der Gegenkraft abhängt. Übersteigt die Gegenkraft die sogenannte Blockierkraft, so wird der Stellweg Null. Ebenso kann ein Piezoaktuator gemäß der Erfindung am Ende seines maximalen Hubs keine Kraftwirkung mehr erzeugen; allerdings verfügen gut gefertigte Piezostapel über eine sehr große Eigensteifigkeit und bringen bei einer Bauhöhe von genannten 20 mm, bei einem Querschnitt von 8 x 8 mm, immerhin Blockierkräfte in der Größenordnung von 2 kN auf. Für jeden Aktuatortyp hängt also der bei einer gegebenen Anregungsspannung tatsächlich ausführbare Hub von den speziellen Einsatzbedingungen ab.

Alle in der Beschreibung, den nachfolgenden Ansprüchen und der Zeichnung dargestellten Merkmale können sowohl einzeln als auch in beliebiger Kombination miteinander erfindungswesentlich sein.

### Bezugszeichenliste

- 1, 2 -: piezoelektrische Stapelelemente
- 10, 10', 10'a, 10'b -: erfindungsgemäße Gesamtelemente
- 11,21 -: erste Stapelenden
- 110,210 -: zweite Stapelenden
- 111,211 -: verkippbare Anbindungen
- 3, 7 -: Schenkel
- 4 -: Traverse
- 40 -: Traversenplatte
- 5, 5', 5" -: Mittel zur Kraftbeaufschlagung
- 6 -: gelenkig wirkende Mittel
- 8 -: Festkörpergelenk
- 9 -: Kulminationspunkt
- 9' -: Verkippungspunkt
- 12 -: Hebel
- 90 -: Gegenfläche
- 91 -: Querstange
- 92 -: Tisch
- 93 -: anzutreibendes Element
- 94 -: Welle
- 95 -: Hohlzylinder

## Patentansprüche

1. Piezoaktuatorisches Antriebs- bzw. Verstellelement, das wenigstens zwei in Stapelform vorliegende piezoelektrische Baugruppen (1, 2) enthält, dadurch gekennzeichnet, daß
a)genannte Stapel (1, 2) möglichst dicht nebeneinander parallel angeordnet sind, sich
b) die Stapel jeweils einerseits mit ihrer ersten Stapelstirnfläche (11, 21) über eine verkippbare Anbindung (111, 211) an einem Schenkel (3 ; 30) abstützen und
c) die genannten ersten Stapelstirnflächen (11, 21) jeweils gegenüberliegenden zweiten Stapelstirnflächen (110, 210) vermittels einer biegesteifen gemeinsamen Traverse (4), auf welcher genannte zweite Stapelstirnflächen plan aufliegen, miteinander starr verbunden sind,
d) Mittel (5; 6) vorgesehen sind, die genannte Stapel (1, 2) zwischen dem Schenkel (3; 30) und der Traverse (4) mit einer symmetrisch wirkenden, definiert vorgebbaren Kraft beaufschlagen und
e) gelenkig wirkende Mittel (6) vorgesehen sind, die
- entweder eine relative Auslenkung und/oder einen Hub, der dem in Ruhelage gehaltenen Schenkel (3; 30) gegenüberliegenden Traverse (4; bzw. Bauteils 7)
- oder eine relative Verkippung und/oder einen Hub, des der in Ruhelage gehaltenen Traverse (4) gegenüberliegenden Schenkels (3; 30)
bei Anlegen zeitlich und gegeneinander veränderlicher elektrischer Spannungen an genannte piezoelektrische Stapel zulassen.

2. Piezoaktuatorisches Antriebs- bzw. Verstellelement nach Anspruch 1., dadurch gekennzeichnet, daß genannte Gelenkmittel in Form von Festkörpergelenken (6; 111, 211) innerhalb von, auf genannte zwei piezoelektrische Stapel (1, 2) symmetrisch einwirkenden Baugruppen ausgebildet sind.

3. Piezoaktuatorisches Antriebs- bzw. Verstellelement nach Anspruch 1., dadurch gekennzeichnet, daß genannte Gelenkmittel in Form von Festkörpergelenken (6) innerhalb wenigstens eines, genannte zwei piezoelektrische Stapel asymmetrisch erfassenden Druckelements (5'), wie z.B. eine Druckstange, ausgebildet sind.

4. Piezoaktuatorisches Antriebs- bzw. Verstellelement nach Anspruch 1., dadurch gekennzeichnet, daß genannte Gelenkmittel und Mittel zur Kraftbeaufschlagung in Form von symmetrisch zu genannten zwei piezoelektrischen Stapeln angeordneten Federelementen (5; 6), wie z.B. Biegefedern, ausgebildet sind.

5. Piezoaktuatorisches Antriebs- bzw. Verstellelement nach Anspruch 1., 2. oder 3., dadurch gekennzeichnet, daß genannte Gelenkmittel über einen im wesentlichen mittig wirkenden und symmetrisch zu genannten zweiten Stapelstirnflächen (110, 210) angeordneten, vorzugsweise als Festkörpergelenk ausgebildeten Eingriff (8) genannter Traverse (4) erfaßt sind.

6. Piezoaktuatorisches Antriebs- bzw. Verstellelement nach Anspruch 1., dadurch gekennzeichnet, daß eine symmetrische Kraftbeaufschlagung genannter zwei piezoelektrischer Stapel (1, 2) über ein diese umfassendes Festkörperparallelogramm (7, 6, 5, 3) erfolgt.

7. Piezoaktuatorisches Antriebs- bzw. Verstellelement nach Anspruch 1., dadurch gekennzeichnet, daß eine symmetrische Kraftbeaufschlagung genannter zwei piezoelektrischer Stapel (1, 2) über einen symmetrisch zu genannten Stapeln angeordneten Zuganker erfolgt.

8. Piezoaktuatorisches Antriebs- bzw. Verstellelement nach Anspruch 1. und 3, dadurch gekennzeichnet, daß eine symmetrische Kraftbeaufschlagung genannter zwei piezoelektrischer Stapel (1, 2) über diese asymmetrisch erfassende Druck- und Zugelemente (5', 5") erfolgt.

9. Piezoaktuatorisches Antriebs- bzw. Verstellelement nach Anspruch 1., dadurch gekennzeichnet, daß genannte piezoelektrische Stapel (1, 2) mit zeitlich in ihrer Differenz und/oder ihrem Mittelwert variierbaren elektrischen Spannungen beaufschlagbar sind.

10. Piezoaktuatorisches Antriebs- bzw. Verstellelement nach Anspruch 9., dadurch gekennzeichnet, daß genannte Stapel zusätzlich zu einer elektrischen Gleichvorspannung mit einer Wechselspannung beaufschlagbar sind, wobei eine Phasenverschiebung genannter Wechselspannung zwischen den Stapeln (1, 2) zwischen 0° ≤ ϕ ≤ 360°, je nach Einsatzzweck des Antriebselements variabel vorgeb- und einstellbar ist.

11. Piezoaktuatorisches Antriebs- bzw. Verstellelement nach Anspruch 9 oder 10., dadurch gekennzeichnet, daß ein Mittelwert an genannten Stapeln (1, 2) anliegender Gleichvorspannung konstant gehalten und ausschließlich ein Differenzspannungsanteil einer Variation unterworfen ist.

12. Piezoaktuatorisches Antriebs- bzw. Verstellelement nach einem der Ansprüche 1. bis 8, und 9 bis 11, dadurch gekennzeichnet, daß vier piezoelektrische Stapel (1, 1', 2, 2') karreeartig zwischen einer gemeinsamen plattenförmig ausgebildeten Schenkelplatte (30) und einer Traversenplatte (40) angebracht sind, wobei paarweise nebeneinander liegende piezoelektrische Stapel, je nach gewünschter Wirkrichtung, jeweils mit identischen elektrischen Spannungen bzw. Spannungsverläufen beaufschlagbar sind.

13. Piezoaktuatorisches Antriebs- bzw. Verstellelement nach Anspruch 12., dadurch gekennzeichnet, daß genannte verkippbare Anbindung jedes einzelnen piezoelektrischen Stapels an genannte Schenkelplatte über kegelförmig, vorzugsweise pilzkopfartig, insbesondere als Festkörpergelenk ausgebildete Kopplungsstellen erfolgt.

14. Piezoaktuatorisches Antriebs- bzw. Verstellelement nach einem der vorstehenden Ansprüche, dadurch gekennzeichnet, daß mehrere genannter kompletter Antriebs- bzw. Verstellelemente zu einer gemeinsamen Antriebs- bzw. Verstelleinheit zusammengefaßt sind.

15. Piezoaktuatorisches Antriebs- bzw. Verstellelement nach Anspruch 14., dadurch gekennzeichnet, daß wenigstens zwei Elemente, bestehend aus je zwei genannter piezoelektrischer Einzelstapel, in linearer Anordnung zum Einsatz gelangen, wobei die Stapelpaarungen jeweils symmetrisch, insbesondere im Gleichtakt, mit identischen Spannungen bzw. Spannungsverläufen beaufschlagbar sind.

16. Piezoaktuatorisches Antriebs- bzw. Verstellelement nach Anspruch 14., dadurch gekennzeichnet, daß wenigstens zwei Elemente, bestehend aus je zwei genannter piezoelektrischer Einzelstapel, in linearer Anordnung zum Einsatz gelangen, wobei die Stapelpaarungen jeweils asymmetrisch, insbesondere im Gegentakt, mit identischen Spannungen bzw. Spannungsverläufen beaufschlagbar sind.

17. Piezoaktuatorisches Antriebs- bzw. Verstellelement nach Anspruch 14., dadurch gekennzeichnet, daß wenigstens zwei Elemente, bestehend aus je zwei genannter piezoelektrischer Einzelstapel, bezüglich ihrer Wirkrichtung in orthogonaler Anordnung zum Einsatz gelangen, wobei alle Stapelnormalen in Ruhestellung parallel verlaufen.

18. Piezoaktuatorisches Antriebs- bzw. Verstellelement nach Anspruch 14., dadurch gekennzeichnet, daß wenigstens zwei Elemente, bestehend aus je zwei genannter piezoelektrischer Einzelstapel, bezüglich ihrer Wirkrichtung in orthogonaler Anordnung zum Einsatz gelangen, wobei die Stapelnormalen der jeweiligen einzelnen Elemente in Ruhestellung senkrecht zueinander verlaufen.

19. Piezoaktuatorisches Antriebs- bzw. Verstellelement nach Anspruch 18., dadurch gekennzeichnet, daß genannte zwei Einzelelemente, in einer Dimension in fester Verbindung stehen.

20. Piezoaktuatorisches Antriebs- bzw. Verstellelement nach Anspruch 14., dadurch gekennzeichnet, daß mehrere genannter Stapelpaarungen rotationssymmetrisch zu einem Antriebselement verteilt angeordnet sind und durch entsprechende Spannungsbeaufschlagung alternierend an genanntem Antriebselement angreifen.

## Claims

1. Piezoelectrically actuated drive means and displacement means, respectively, comprising at least two stack-shaped piezoelectric elements (1, 2), characterized in that
a) said stacks (1, 2) are in substantially narrow adjacent and parallel arrangement,
b) each of said stacks, on the one side, abuts against an arm (3 ; 30) via tiltable connections (111, 211) with the first leading stack faces (11, 21), and in that
c) in remote opposition to said first leading stack faces (11, 21) each of second leading stack faces (110, 210) are rigidly connected with one another by means of a common rigid cross bar (4) on which said second leading stack faces (110, 210) flatly rest,
d) force exerting means (5, 6) are provided for exerting a defined preselectable force symmetrically on said stacks (1, 2) between the arm (3, 30) and the cross bar (4), and
e) joint means (6) are provided which, when applying a mutually and time variable electrical voltage across said piezoelectric stacks, permit
- a deflection and/or lift of the cross bar (4; and the arm 7, respectively) relative to the remotely arranged arm (3, 30) which is in a position of rest,
- respectively, a tilting and/or lifting of the arm (3, 30) relative to the remotely arranged cross bar (4) kept in a position of rest.

2. Piezoelectrically actuated drive and displacement means, respectively, as claimed in claim 1, wherein said joint means are embodied as solid state joints (6, 111, 211) within units symmetrically acting upon said two piezoelectric stacks (1, 2).

3. Piezoelectrically actuated drive and displacement means, respectively, as claimed in claim 1, wherein said joint means are embodied as solid state joints (6) as, for example, pressure rods, within at least one compression means (5') which asymmetrically engages said two piezoelectric stacks.

4. Piezoelectrically actuated drive and displacement means, respectively, as claimed in claim 1, wherein said joint means and said force exerting means are embodied as spring means (5, 6,) such as bending springs, which are symmetrically arranged relative to said two piezoelectric stacks.

5. Piezoelectrically actuated drive and displacement means, respectively, as claimed in claim 1, 2 or 3, wherein said joint means are operatively connected to a point of contact (8) embodied as a solid state joint of said cross bar (4) being substantially centrally effective relative and symmetrically to said second leading faces (110, 210) of said stacks.

6. Piezoelectrically actuated drive and displacement means, respectively, as claimed in claim 1, wherein said the symmetrically exerted force upon said two piezoelectric stacks (1, 2) is achieved via a solid state parallelogram (7, 6, 5, 3) enclosing the former.

7. Piezoelectrically actuated drive and displacement means, respectively, as claimed in claim 1, wherein the symmetrically exerted force upon said two piezoelectric stacks (1, 2) is executed by a tension rod symmetrically arranged relative to said stacks.

8. Piezoelectrically actuated drive and displacement means, respectively, as claimed in claim 1 and 3, wherein the symmetrically exerted force upon said two piezoelectric stacks (1, 2) is executed by tension and compression means (5', 5") asymmetrically arranged to the former.

9. Piezoelectrically actuated drive and displacement means, respectively, as claimed in claim 1, wherein electric voltages are applicable across said piezoelectric stacks (1, 2), said voltages being variable in time with respect to difference and/or to mean value.

10. Piezoelectrically actuated drive and displacement means, respectively, as claimed in claim 9, wherein in addition to a d.c. voltage an a.c. voltage is applied across said stacks, in which a phase-shift of said a.c. voltage is variably adjustable between said stacks (1, 2) of from 0°≤ϕ ≤360° depending on the kind of application of the drive element.

11. Piezoelectrically actuated drive and displacement means, respectively, as claimed in claim 9, wherein a mean value of the d.c. voltage applied across said stacks (1, 2) is kept constant and subsequently a difference voltage portion is subject to a variation.

12. Piezoelectrically actuated drive and displacement means, respectively, as claimed in any of the claims 1 to 8 and 9 to 11, wherein four piezoelectric stacks (1, 1', 2, 2') are arranged commonly in a square between an arm plate (30) and a cross plate (40), wherein piezoelectric stacks adjacently arranged in pairs are subject to identical electric voltages and voltage curves, respectively, depending on the desired effective direction.

13. Piezoelectrically actuated drive and displacement means, respectively, as claimed in claim 12, wherein the tiltable connection of each individual piezoelectric stack to said arm plate is established via cone-shaped, preferably mushroom-shaped coupling points embodied as solid state joints.

14. Piezoelectrically actuated drive and displacement means, respectively, as claimed in any of the preceding claims, wherein a plurality of said complete drive and displacement elements, respectively, are comprised to a common drive and displacement unit, respectively.

15. Piezoelectrically actuated drive and displacement means, respectively, as claimed in claim 14, wherein at least two elements each constituted of two individual piezoelectric stacks are employed in a linear arrangement, and wherein identical voltages and voltage curves, respectively, are applicable symmetrically, particularly in common mode, across each of the couples of stacks.

16. Piezoelectrically actuated drive and displacement means, respectively, as claimed in claim 14, wherein at least two elements each constituted of two individual piezoelectric stacks are employed in a linear arrangement, and wherein identical voltages and voltage curves, respectively, are applicable asymmetrically, particularly in push-pull mode, across each of the couples of stacks.

17. Piezoelectrically actuated drive and displacement means, respectively, as claimed in claim 14, wherein at least two elements each constituted of two individual piezoelectric stacks are employed in an orthogonal arrangement with respect to their operation direction, wherein the entire stack normals are in parallel to one another in the rest position.

18. Piezoelectrically actuated drive and displacement means, respectively, as claimed in claim 14, wherein at least two elements each constituted of two individual piezoelectric stacks are employed in an orthogonal arrangement with respect to their operation direction, wherein the stack normals of the respective individual elements are perpendicular to one another in the rest position.

19. Piezoelectrically actuated drive and displacement means, respectively, as claimed in claim 18, wherein said two individual elements are, in one dimension, secured to one another.

20. Piezoelectrically actuated drive and displacement means, respectively, as claimed in claim 14, wherein a plurality of stack couples are rotation symmetrically arranged relative to a drive element and alternatingly act on said drive element by applying a respective voltage.

## Revendications

1. Un organe piézoactuataire de commande ou de réglage comprenant au moins deux composants piézo-électriques (1, 2) en forme de pile, est caractérisé en ce que
a) lesdites piles (1, 2) sont disposées en parallèle et très proches l'une par rapport à l'autre;
b) sur un côté, les piles s'appuient contre une jambe (3; 30) par leur première face frontale (11, 21) et par l'intermédiaire d'une liaison basculante, (111, 211);
c) les première faces frontales (11, 21) sont rigidement liées aux secondes faces frontales (110, 210) par une traverse (4) rigide à la flexion, sur laquelle les secondes faces frontales des piles reposent;
d) l'invention prévoit des moyens (5; 6) qui appliquent aux dites piles (1, 2), entre la jambe (3, 30) et la traverse (4), une force prédéfinie, agissant de manière symétrique, ainsi que
e) des moyens (6) agissant comme une articulation, qui, par l'intermédiaire de l'application de tensions électriques variables en ce qui concerne les temps et les tensions, permettent
- d'obtenir un déplacement latéral relatif et/ou une course de la traverse (4; ou du composant 7) opposée à la jambe maintenue en position immobile (3 ; 30 ) ou
- de réaliser un basculement relatif et /où une course de la jambe (3; 30) opposée à la traverse (4) et maintenue en état d'immobilité.

2. Un organe piézoactuataire de commande ou de réglage selon la revendication 1 est caractérisé en ce que lesdites articulations sont conçues comme articulations monolithiques (6; 111, 211) placées au sein de composants agissant de manière symétrique sur les piles piézo-électriques (1, 2).

3. Un organe piézoactuataire de commande ou de réglage selon la revendication 1 est caractérisé en ce que lesdites articulations sont conçues en forme monolithique (6) au sein d'au moins un des éléments de pression (5'), par ex. sur une tige de compression, qui, de manière asymétrique, agissent sur les deux piles piézo-électriques susmentionnées.

4. Un organe piézoactuataire de commande ou de réglage selon la revendication 1 est caractérisé en ce que les articulations et les moyens assurant l'application des forces sont conçus comme éléments de ressort (5; 6), par exemple de ressorts spiraux, et disposés symétriquement par rapport aux deux piles piézo-électriques susmentionnées.

5. Un organe piézoactuataire de commande ou de réglage selon les revendications 1, 2 ou 3 est caractérisés en ce que son engrènement (8) sur la traverse (4) est assuré par lesdites articulations en forme monolithique, agissant en générale de manière centrique et disposés symétriquement aux secondes faces frontales de la piles (110, 210).

6. Un organe piézoactuataire de commande ou de réglage selon la revendication 1 est caractérisé en ce que l'application symétrique de la force aux deux piles piézo-électriques (1, 2) est réalisée par l'intermédiaire d'un parallélogramme monolithique (7, 6, 5, 3).

7. Un organe piézoactuataire de commande ou de réglage selon la revendication 1 est caractérisé en ce que l'application symétrique de la force aux deux piles piézo-électriques (1, 2) est réalisée par l'intermédiaire d'un aimant tirant disposé de manière symétrique par rapport aux dites piles en question.

8. Un organe piézoactuataire de commande ou de réglage selon les revendications 1 et 3 est caractérisé en ce que l'application symétrique de la force aux deux piles piézo-électriques (1, 2) est réalisée par des organes de pression et de traction (5'; 5") qui s'emprennent aux piles de manière asymétrique.

9. Un organe piézoactuataire de commande ou de réglage selon la revendication 1 est caractérisé en ce que les tensions électriques appliquées aux dites piles piézo-électriques (1, 2) peuvent varier en ce qui concerne leur différence dans le temps et/ou leur valeur moyenne.

10. Un organe piézoactuataire de commande ou de réglage selon la revendication 9 est caractérisé en ce que l'on peut appliquer aux dites piles piézo-électriques non seulement une tension de polarisation continue mais en plus aussi une tension alternative, le déphasage de ladite tension alternative entre les piles (1, 2) allant de 0° ≤ ϕ ≤ 360° pouvant être réglé préalablement et de manière variable en fonction de l'usage.

11. Un organe piézoactuataire de commande ou de réglage selon les revendications 9 ou 10 est caractérisé en ce qu'il importe de maintenir la tension continue appliquée aux piles (1, 2) à un niveau constant et que seule la part différentielle de la tension est soumise à la variation.

12. Un organe piézoactuataire de commande ou de réglage selon une des revendications de 1 à 8 et de 9 à 11 est caractérisé en ce que quatre piles piézo-électriques (1, 1', 2, 2') sont disposées en carré entre une jambe en forme de plaque (30) et une traverse (40) en forme de plaque, cette disposition permet d'appliquer aux paires de piles piézo-électriques juxtaposées des tensions électriques ou des variations de tensions identiques en tenant compte du sens d'action.

13. Un organe piézoactuataire de commande ou de réglage selon la revendication 12 est caractérisé en ce que ledit attachement basculant assurant la liaison individuelle de chaque pile piézo-électrique à la plaque qui fait fonction de jambe est réalisé par des points d'accouplements ayant une forme conique ou de champignon ou constituent une articulation monolithique.

14. Un organe piézoactuataire de commande ou de réglage selon une des précédentes revendications est caractérisé en ce que plusieurs desdits organes de commande ou de réglage ont été regroupés pour former un seul mécanisme de commande ou de réglage.

15. Un organe piézoactuataire de commande ou de réglage selon la revendication 14 est caractérisé en ce qu'au moins deux organes comprenant chacun deux desdites piles piézo-électriques individuelles, sont utilisés en disposition linéaire et que des tensions identiques peuvent être appliquées aux paires de piles de manière symétrique, notamment en mode commun.

16. Un organe piézoactuataire de commande ou de réglage selon la revendication 14 est caractérisé en ce qu'au moins deux éléments composés chacun de deux desdites piles piézo-électriques individuelles sont exploités de manière linéaire et que des tensions identiques peuvent être appliquées aux paires de piles de manière asymétrique, notamment en mode inversé.

17. Un organe piézoactuataire de commande ou de réglage selon la revendication 14 est caractérisé en ce qu'au moins deux éléments composés chacun de deux desdites piles piézo-électriques sont exploités de manière orthogonale en ce qui concerne leur direction d'action, et que les normales des piles sont disposées en parallèle quand le système est en position de repos.

18. Un organe piézoactuataire de commande ou de réglage selon la revendication 14 est caractérisé en ce qu'au moins deux éléments composés chacun desdites deux piles piézo-électriques sont exploités de manière orthogonale en ce qui concerne leur direction d'action et que les normales des piles des éléments individuels sont disposées en position de repos de manière orthogonale, les uns par rapport aux autres.

19. Un organe piézoactuataire de commande ou de réglage selon la revendication 18 est caractérisé en ce que dans une dimension lesdits deux éléments individuel sont liés solidairement l'un à l'autre.

20. Un organe piézoactuataire de commande ou de réglage selon la revendication 14 est caractérisé en ce que plusieurs des dites paires de piles sont disposées en symétrie centrale par rapport à l'organe de commande et que par une application déterminée de la tension, les paires de piles agissent en alternance sur ledit organe de commande.
